# EUROPÄISCHE PATENTSCHRIFT

(11) **EP 0 480 299 B1**
(45) Veröffentlichungstag und Bekanntmachung des Hinweises auf die Patenterteilung: **28.12.1994**
(21) Anmeldenummer: 91116827.6
(22) Anmeldetag: 02.10.1991
(51) Int. Cl.: B25B 1/10, B25B 1/24

(54) **Mehrfachspanner zum Festspannen von mindestens zwei Werkstücken**
Multiple clamping device for clamping at least two workpieces
Moyen de serrage multiple pour le serrage d'au moins deux pièces

(30) Priorität: 06.10.1990 DE 4031746
(43) Veröffentlichungstag der Anmeldung: 15.04.1992
(73) Patentinhaber: Saurer-Allma GmbH, D-87437 Kempten (DE)
(72) Erfinder: Milz, Pankraz, W-8960 Kempten (DE)
(74) Vertreter: Pfister, Helmut, Dipl.-Ing.

(56) Entgegenhaltungen:
- US-A- 4 934 674

## Beschreibung

Die Erfindung betrifft einen Mehrfachspanner zum Festspannen von mindestens zwei Werkstücken in einer Spannvorrichtung, mit einem Schraubstockkörper, der an gegenüberliegenden Enden je eine Festbacke trägt, wobei zwischen den beiden Festbacken im Schraubstockköprer zwei bewegliche Backen geführt sind, die je einer Festbacke zugeordnet und gemeinsam angetrieben sind.

Es sind Mehrfachspanner bekannt, die dazu dienen, auf einer Unterlage mehrere Werkstücke nebeneinander festzuspannen, so daß sie gleichzeitig im gleichen Arbeitsgang oder kurz nacheinander bearbeitet werden können. Die GB-A 21 78 985 zeigt einen derartigen Mehrfachspanner. Dabei sind auf einem Schraubstockkörper in der Nähe der Enden Festbacken angeordnet. Zwischen den Festbacken sind bewegliche Backen vorgesehen, die an den einander zugewandten Flächen abgeschrägt sind. Ein gemeinsames Spannstück, das den schrägen Flächen angepaßt ist und als Keil dient, kann rechtwinklig zur Spannrichtung für die Werkstücke zwischen den Festbacken und den beweglichen Backen gegen den Schraubstockkörper gespannt werden, wobei die beiden Werkstücke in einem Arbeitsgang festgehalten werden. Insbesondere ist dabei vorgesehen, eine der Festbacken versetzbar zu lagern, so daß die gesamte Spannweite verändert werden kann.

Andere Spannvorrichtungen sehen vor, daß auf einer Grundplatte mehrere Kombinationen von Festbacken und beweglichen Backen nebeneinander angeordnet sind, so daß nebeneinander mehrere Werkstücke einzeln gespannt werden können.

Der Erfindung liegt die Aufgabe zugrunde, einen Mehrfachspanner zu schaffen, der es ermöglicht, mit höheren Kräften zu spannen, als diese durch eine Drehbewegung einer Schraubspindel oder dergleichen aufgebracht werden können. Insbesondere sollte die Anordnung auch derart getroffen sein, daß eine einfache Bedienung möglich ist, d.h. bei einem Spannvorgang sollten mehrere Werkstücke gleichartig und in einem Arbeitsgang festgespannt werden können, wobei sichergestellt sein muß, daß alle Werkstücke mit im wesentlichen gleicher Spannkraft gehalten sind. Darüberhinaus sollte ausgeschlossen sein, daß die aufgespannten Werkstücke die Zugänglichkeit der Festspanneinrichtung behindern.

Zur Lösung dieser Aufgabe geht die Erfindung aus von einer Vorrichtung der eingangs angegebenen Gattung. Erfindungsgemäß wird vorgeschlagen, daß sich längs der Führung im Schraubstockkörper eine zweiteilige Spindel erstreckt, deren beide Teile gemeinsam drehbar und axial gegeneinander beweglich sind, wobei die Spindelteile mit gegenläufigem Gewinde je mit einer der beiden beweglichen Backen zusammenwirken, und mit einer Einrichtung zur Erhöhung der Spannkraft, die in der Spannstellung die beiden Spindelteile auseinanderdrückt.

Mittels der Spindel ist es möglich, die beweglichen Spannbacken von einem Ende des Mehrfachspanners her zu bedienen, also von einer Stelle aus, die in der Regel gut zugänglich ist. Dies erlaubt es auch, mehrere Mehrfachspanner nebeneinander, z. B. auf einer Grundplatte zu montieren.

Mittels der gegenläufigen Gewinde können die beweglichen Backen so gesteuert werden, daß sie beim gleichen Bedienungsvorgang die Werkstücke einspannen. Insbesondere erreicht die Erfindung aber auch, daß trotz des gemeinsamen Spindelantriebs in der Spannstellung eine wesentlich erhöhte Spannkraft aufgewandt werden kann, die über das hinausgeht, was manuell an der Schraubspindel aufbringbar ist. Dabei wirkt es sich günstig aus, daß für die Aufbringung dieser Spannkraft die beiden Spindelteile und die beweglichen Backen lediglich auseinandergepreßt werden. Dies vereinfacht die Anordnung dieser Einrichtung zur Erhöhung der Spannkraft.

Die Einrichtung zur Erhöhung der Spannkraft kann eine verschiedene Ausbildung aufweisen. Diese Einrichtung kann eine Servo-Einrichtung sein, die durch eine außenliegende Kraftquelle, beispielsweise eine Hydraulikleitung oder auch eine Pneumatikleitung versorgt wird. Die Erfindung bevorzugt jedoch als Einrichtung zur Erhöhung der Spannkraft einen Kraftverstärker, der über den Antrieb der Schraubspindel angetrieben ist. Ein solcher Kraftverstärker kann beispielsweise mechanisch ausgebildet sein. Solche Kraftverstärker sind durch die DE-PS 23 08 175 oder auch durch die DE-OS 37 08 021 bekannt geworden.

Anstelle eines mechanischen Kraftverstärkers kann aber auch beispielsweise ein hydraulischer Kraftverstärker vorgesehen sein, der ebenfalls durch den Antrieb der Schraubspindel angetrieben ist.

Nach einem weiteren Merkmal der Erfindung wird vorgeschlagen, daß mindestens einer der Spindelteile hohl ausgebildet ist und den Antrieb für die Einrichtung zur Erhöhung der Spannkraft aufnimmt. Dieser Antrieb kann beispielsweise eine Antriebspindel sein. Durch die hohle Schraubspindel kann aber auch eine Druckleitung geführt sein.

Nach einem weiteren Merkmal nehmen die beiden Spindelteile in sich die Einrichtung zur Erhöhung der Spannkraft auf. Dabei ist insbesondere der eine Spindelteil rohrförmig gestaltet und nimmt die Antriebspindel des Kraftverstärkers auf, während der andere Spindelteil mindestens eine Höhlung besitzt, in die der eine Spindelteil hineinragt und die den Kraftverstärker aufnimmt. Der Kraftverstärker wird in diesem Fall zwischen dem Ende des eintauchenden Spindelteils und dem inneren Ende der Höhung wirksam.

Um die axiale Beweglichkeit zwischen den beiden Spindelteilen zu erhalten, empfiehlt sich eine Langlochanordnung mit einem darin beweglichen Bolzen zwischen den beiden Spindelteilen.

Es hat sich als günstig herausgestellt, wenn sich die beiden Spindelteile mit der beweglichen Backe federnd am Schraubstockkörper abstützen und unbelastet ein geringes Maß aus ihrer vorgesehenen Betriebsstellung verschoben sind. Hierdurch wird erreicht, daß beim Spannvorgang zunächst das eine Werkstück zwischen einer Festbacke und der zugehörigen beweglichen Backe festgespannt wird. Beim weiteren Spannvorgang verschiebt sich die zweiteilige Spindel in die Betriebsstellung, und es kann das andere Werkstück festgespannt werden.

Die Erfindung benützt vorzugsweise bewegliche Backen, die je einen Schlitten umfassen, der mit den Schraubspindelteilen zusammenwirkt, sowie ein je auf den Schlitten aufgesetztes Backenelement, das ebenso wie die Festbacke auswechselbar und umsetzbar gehalten ist. Auf diese Weise können die Backen ausgewechselt werden, und es ist auch möglich, durch verschiedene oder auch durch umgesetzte Backen die jeweiligen Spannweiten den Werkstücken anzupassen.

Eine günstige Bauweise wird dadurch erhalten, daß eine Hülse vorgesehen ist, die einen der Spindelteile umgibt und die die axiale Lage der Spindel bestimmt. Diese Hülse wirkt vorzugsweise mit den federnden Elementen zusammen, die die beiden Spindelteile etwas aus der Mittellage verschieben.

Eine weitere Entwicklung der Erfindung ist gekennzeichnet durch eine Klemmverbindung zwischen der Hülse und den Spindelteilen. Eine solche Anordnung erlaubt eine Verstellung der beiden Spindelteile gegenüber der Hülse bzw. dem Schraubstockkörper. Dies ermöglicht eine Einstellung der Spindel und der beweglichen Backen derart, daß die Spannweiten der beiden zusammenwirkenden Backenpaare in weiten Grenzen verändert werden können. Insbesondere können hierbei auch die Spannweiten starke Unterschiede aufweisen.

In der Zeichnung ist ein Ausführungsbeispiel der Erfindung schematisch dargestellt. Es zeigen:

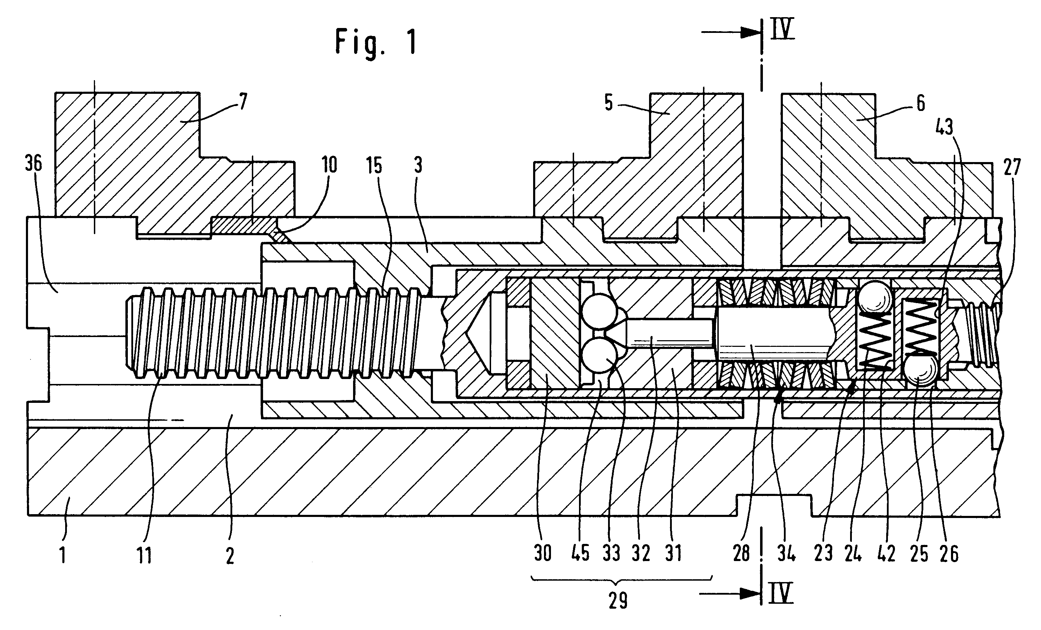

- Fig. 1: den linken Teil eines erfindungsgemäßen Mehrfachspanners in einem Längsschnitt,

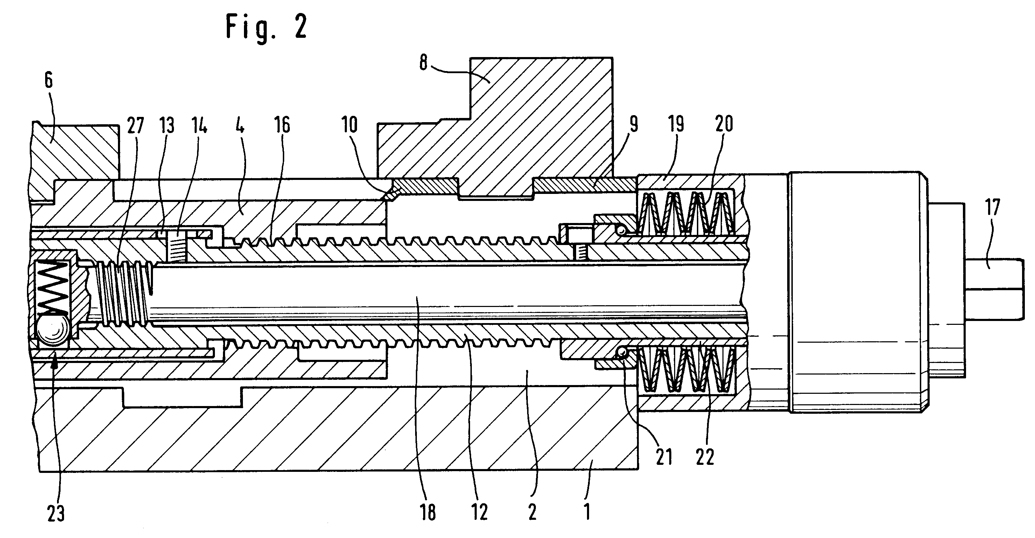

- Fig. 2: den rechten Teil des Mehrfachspanners gemäß Fig. 1,
- Fig. 3: eine Einzelheit der Erfindung, und
- Fig. 4: einen Schnitt durch die Darstellung der Fig. 1 entsprechend der Schnittlinie IV-IV.

Der Schraubstockkörper 1 besitzt eine längliche Ausnehmung bzw. Nut 2, die sich im wesentlichen über die ganze Länge des Schraubstockkörpers erstreckt. Diese Nut 2 ist nach oben offen.

Die Nut 2 nimmt die beiden Schlitten 3 und 4 auf, die in der Nut in der Führung 35 gehalten sind. Dabei dient die eine Führung 35 für beide Schlitten 3 und 4. In speziellen Fällen kann jedoch jedem der Schlitten 3 und 4 eine besondere Führung zugeordnet sein. Die Führung besteht im wesentlichen aus den Ausnehmungen 36, in die die Rippe 37 an den Schlitten 3,4 hineinragt. Diese Rippe 37 sorgt für die Aufnahme der Vertikalkräfte. Die Führungsflächen 38 übernehmen die seitliche Führung der Schlitten 3,4.

Die Schlitten 3,4 tragen die beweglichen Backen 5 und 6. An den Enden des Schraubstockkörpers sind die Festbacken 7 und 8 montiert, und zwar vorzugsweise in der Weise, daß die Festbacken mit Vorsprüngen 40 in die Nuten 39 des Schraubstockkörpers eingreifen. Die Schrauben 41 sichern die Festbacken auf dem Schraubstockkörper.

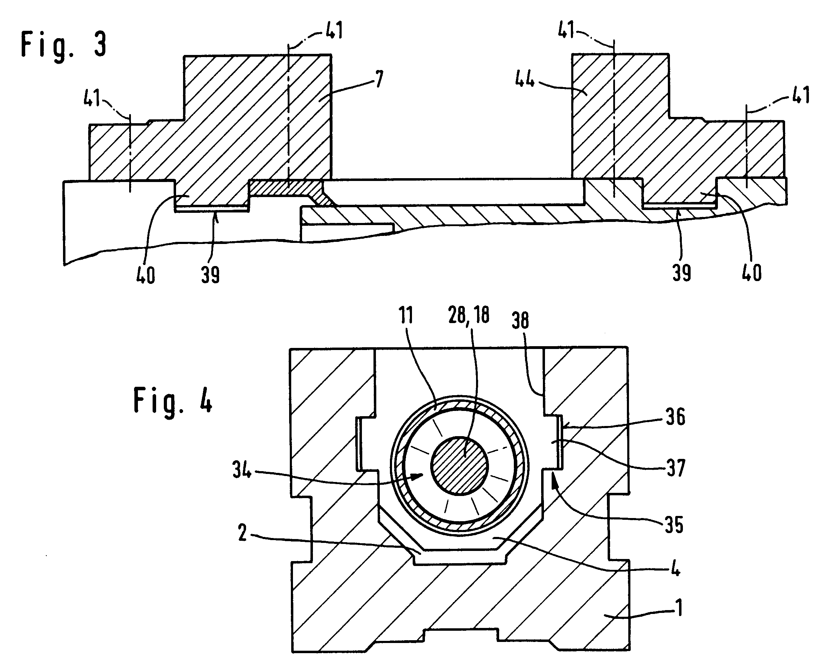

Wie die Fig. 3 erkennen läßt, sind die Festbacken 7 bzw. auch 8 in umgekehrter Stellung auf dem Schraubstockkörper 1 montierbar. Entsprechendes gilt für das Backenelement 44, das beispielsweise identisch sein kann mit der beweglichen Backe 5. Es ist aber auch die Anordnung eines anderen Backenelements möglich. Entsprechendes gilt für die bewegliche Backe 6.

Auf der Oberseite des Schraubstockkörpers sind ferner die Abdeckungen 9 und 10 vorgesehen. Die Abdeckungen 10 wirken dabei mit den Schlitten 3 bzw. 4 zusammen und verhindern, daß Späne oder dergleichen in die Ausnehmung 2 hinunterfallen. Die Abdeckung 9 unter der Festbacke 8 erlaubt bei der Montage das Einschieben der beweglichen Backen.

Die Schlitten 3 und 4 sind hohl ausgebildet und nehmen die Schraubspindel auf, die aus den Teilen 11 und 12 besteht. Die Schraubspindelteile 11 und 12 sind gegeneinander unverdrehbar, also nur miteinander verdrehbar. Die Schraubspindelteile 11 und 12 sind jedoch in geringem Maße axial gegeneinander verschiebbar. Diese axiale Verschiebbarkeit wird durch die Langlochanordnung 13 mit dem Bolzen 14 möglich, der in den Spindelteil 12 eingreift.

Der Schraubspindelteil 11 wirkt über ein Gewinde 15 mit dem Schlitten 3 zusammen, während der Schraubspindelteil 12 über das Gewinde 16 auf den Schlitten 4 einwirkt. Die Gewinde 15 und 16 sind gegenläufig, so daß bei einer Drehung der Schraubspindel in einer Richtung sich die beweglichen Backen 5 und 6 einander entweder nähern oder bei umgekehrter Drehrichtung voneinander entfernen.

Die Drehbewegung der Schraubspindel erfolgt mittels einer Kurbel, die auf den Vierkant 17 aufgesteckt werden kann. Der Vierkant 17 wirkt dabei auf das äußere rechte Ende der Antriebsspindel 18 ein bzw. ist einstückig mit diesem ausgebildet.

Die Antriebsspindel 18 besitzt Bohrungen 42 und 43, die je eine Feder 24 und eine Kugel 25 aufnehmen, wobei die Kugel 25 in eine Bohrung 26 mit kleinerem Durchmesser im Spindelteil 12 eingreift. Die Elemente in den Bohrungen 42 und 43 bilden eine Ausrastkupplung 23, die oberhalb eines bestimmten Drehmoments ausrastet und eine Drehbewegung der Antriebsspindel 18 gegenüber den Spindelteilen 11 und 12 zuläßt.

Der Spindelteil 12 greift in eine Höhlung 45 des Spindelteiles 11 ein. Diese Höhlung nimmt den Kraftverstärker 29 auf. Dieser Kraftverstärker besteht im wesentlichen aus einer ersten Druckplatte 30 und einer zweiten Druckplatte 31, zwischen denen die zylindrischen Walzen 33 angeordnet sind. Ein Keilbolzen 32 kann sich zwischen die Druckwalzen 33 schieben und diese auseinanderdrücken. Auf diese Weise vergrößert sich der Abstand zwischen den Druckplatten 30 und 31.

Der Antrieb des Kraftverstärkers 29, also des Druckbolzen 32, erfolgt durch das bolzenartige Vorderteil 28 der Antriebsspindel 18. Die Druckplatte 31 wirkt über einen Zwischenring auf das Tellerfederpaket 34, das am vorderen Ende des Spindelteiles 12 anliegt. Die Druckplatte 30 des Kraftverstärkers 29 stützt sich dagegen auf dem Boden der Höhlung 45 ab.

An dem in der Zeichnung rechten Ende des Spindelteiles 12 ist eine Hülse 22 befestigt, die ein Wälzlager trägt, dessen äußerer Ring mit 21 bezeichnet ist. Gegen diesen Ring 21 drückt ein Tellerfederpaket 20, das sich seinerseits am Widerlager 19 abstützt. Das Widerlager 19 nimmt beispielsweise noch Einrichtungen auf, die nur einen vorbestimmten Schwenkweg der Antriebsspindel 18 gegenüber dem Schraubspindelteil 12 zulassen. Diese Teile sind nicht näher gezeigt. Sie sind an sich bekannt.

Wenn mittels einer Kurbel am Vierkant 17 gedreht wird, dreht sich die Antriebsspindel 18 und nimmt dabei über die Ausrastkupplung 23 auch den Schraubspindelteil 12 und damit auch über den Bolzen 14 den Schraubspindelteil 11 mit. Über die Gewinde 15 und 16 werden die Schlitten 3 und 4 und damit die beweglichen Backen 5 und 6 verstellt. Die Anordnung ist dabei derart getroffen, daß sich die Schraubspindelteile 11 und 12 und die beweglichen Backen 5 und 6 etwas außerhalb ihrer Mittellage befinden. Durch die Anordnung des Tellerfederpakets 20 sind die Schraubspindelteile etwas nach links verschoben. Auf diese Weise kann zuerst ein Werkstück zwischen den Backen 7 und 5 eingespannt werden. Sobald der bewegliche Backen 5 am Werkstück zur Anlage kommt, verschieben sich die Schraubspindelteile 11 und 12 gegen die Wirkung des Tellerfederpakets 20 nach rechts gegen das Widerlager 19. Nun kann auch das Werkstück zwischen der beweglichen Backe 6 und der Festbacke 8 eingespannt werden.

Eine weiterer Drehung am Vierkant 17 löst die Ausrastkupplung 23 aus, weil die Kraft der Federn 24 überwunden wird und die Kugeln 25 aus den Bohrungen 26 herausgedrückt werden.

Nun kann die Antriebsspindel 18 gegenüber dem Schraubspindelteil 12 gedreht werden, und zwar erfolgt die Drehung im Gewinde 27. Dabei schiebt sich entsprechend der Steigung dieses Gewindes 27 die Antriebsspindel 18 gegen den Kraftverstärker 29 nach vorne und drückt mit dem bolzenartigen Vorderende 28 auf den Keilbolzen 32. Das Auseinanderspreizen der Druckplatten 30 und 31 setzt sich über das Tellerfederpaket 34 auf den Schraubspindelteil 12 fort. Beide Schraubspindelteile 11 und 12 werden auseinandergespreizt und entsprechend wird eine erhöhte Spannkraft an den beweglichen Backen 5 und 6 aufgebracht.

Das Tellerfederpaket 34 hat dabei die Aufgabe, beim Setzen der Werkstücke den aufgebrachten Spanndruck aufrecht zu erhalten.

Beim Lösen der Spannstellung gibt der Keilbolzen 32 die Druckwalzen 33 frei, und der Abstand zwischen den Druckplatten 30 und 31 kann sich wieder verringern. Wenn nicht der Kraftverstärker 29 ohnehin Einrichtungen besitzt, die die Druckplatten 30 und 31 wieder einander nähern, empfiehlt es sich, zwischen dem Spindelteil 11 und dem Schraubstockkörper 1 Rückführfedern vorzusehen, die dafür sorgen, daß die auseinander gespreizten Schraubspindelteile 11 und 12 sich wieder einander nähern.

## Patentansprüche

1. Mehrfachspanner zum Festspannen von mindestens zwei Werkstücken in einer Spannvorrichtung, mit einem Schraubstockörper (1), der an gegenüberliegenden Enden je eine Festbacke (7,8) trägt, wobei zwischen den beiden Festbacken (7,8) im Schraubstockkörper (1) zwei bewegliche Backen (5,6) geführt sind, die je einer Festbacke (7,8) zugeordnet und gemeinsam angetrieben sind, dadurch gekennzeichnet, daß sich längs der Führung (35) im Schraubstockkörper (1) eine zweiteilige Spindel (11,12) erstreckt, deren beide Teile gemeinsam drehbar und axial gegeneinander beweglich sind, wobei die Spindelteile (11,12) mit gegenläufigem Gewinde (15,16) je mit einer der beiden beweglichen Backen (5,6) zusammenwirken, und mit einer Einrichtung zur Erhöhung der Spannkraft, die in der Spannstellung die beiden Spindelteile (11,12) auseinanderdrückt.

2. Mehrfachspanner nach Anspruch 1, dadurch gekennzeichnet, daß die Einrichtung zur Erhöhung der Spannkraft ein Kraftverstärker (29) ist, der über den Antrieb (18) der Schraubspindel (11,12) angetrieben ist.

3. Mehrfachspanner nach einem oder beiden der vorhergehenden Ansprüche, dadurch gekennzeichnet, daß mindestens einer der Spindelteile (11,12) hohl ausgebildet ist und den Antrieb für die Einrichtung zur Erhöhung der Spannkraft aufnimmt.

4. Mehrfachspanner nach einem oder mehreren der vorhergehenden Ansprüche, dadurch gekennzeichnet, daß die beiden Spindelteile (11,12) in sich die Einrichtung zur Erhöhung der Spannkraft aufnehmen.

5. Mehrfachspanner nach einem oder mehreren der vorhergehenden Ansprüche, dadurch gekennzeichnet, daß der eine Spindelteil (12) rohrförmig gestaltet ist und die Antriebsspindel (18) des Kraftverstärkers aufnimmt, daß der andere Spindelteil (11) mindestens teilweise eine Höhlung (45) besitzt, in die der eine Spindelteil (12) hineinragt und die den Kraftverstärker (29) aufnimmt.

6. Mehrfachspanner nach einem oder mehreren der vorhergehenden Ansprüche, dadurch gekennzeichnet, daß zwischen den beiden Spindelteilen (11,12) eine Langlochanordnung (13) mit einem darin beweglichen Bolzen (14) vorgesehen ist.

7. Mehrfachspanner nach einem oder mehreren der vorhergehenden Ansprüche, dadurch gekennzeichnet, daß sich die beiden Spindelteile (11,12) mit den beweglichen Backen (5,6) federnd am Schraubstockkörper (1) abstützen und unbelastet ein geringes Maß aus ihrer vorgesehenen Betriebsstellung verschoben sind.

8. Mehrfachspanner nach einem oder mehreren der vorhergehenden Ansprüche, dadurch gekennzeichnet, daß die beweglichen Backen (5,6) je einen Schlitten (3,4) umfassen, der mit den Schraubspindelteilen (11,12) zusammenwirkt, wobei ein auf den Schlitten (3,4) aufgesetztes Backenelement (44) ebenso wie die Festbacke (7,8) auswechselbar und umsetzbar gehalten ist.

9. Mehrfachspanner nach einem oder mehreren der vorhergehenden Ansprüche, gekennzeichnet durch eine Hülse (22), die einen der Spindelteile (12) umgibt und die axiale Lage der Spindelteile (11,12) bestimmt.

10. Mehrfachspanner nach Anspruch 9, gekennzeichnet durch eine Klemmverbindung zwischen der Hülse (22) und den Spindelteilen (11,12).

## Claims

1. Multiple clamping device for clamping at least two work pieces in a clamping arrangement having a vice body (1) carrying a fixed jaw (7,8) on two opposite ends, with two movable jaws (5,6) being guided in the vice body (1) between the two fixed jaws (7,8), said movable jaws each being assigned to one of the fixed jaws and being operated together, characterized in that a two-piece spindle (11,12) is positioned along the guideway (35) in the vice body, the two pieces being rotatable together and axially movable against each other, with each of the spindle parts (11,12), whose threads run in opposite directions (15,16), acting together with one of the two movable jaws (5,6), and a device for increasing the clamping force for forcing apart the two spindle parts (11, 12) in the clamping position.

2. Multiple clamping device according to claim 1, characterized in that the device for increasing the clamping force is an amplifying device (29) operated via the drive mechanism (18) of the spindle (11,12).

3. Multiple clamping device according to one or both of the preceding claims, characterized in that at least one of the spindle parts (11,12) is hollow for taking up the drive of the device for increasing the clamping force.

4. Multiple clamping device according to one or more of the preceding claims, characterized in that the two spindle parts (11,12) take up the device for increasing the clamping force.

5. Multiple clamping device according to one or more of the preceding claims, characterized in that one spindle part (12) has a tubular design for taking up the drive spindle (18) of the amplifying device, that the other spindle part (11) has at least a partial cavity (45) into which extends one of the spindle parts (12) and which takes up the amplifying device (29).

6. Multiple clamping device according to one or more of the preceding claims, characterized in that an oblong hole arrangement (13) is provided between the two spindle parts (11,12) with a bolt (14) movable in said arrangement.

7. Multiple clamping device according to one or more of the preceding claims, characterized in that the two spindle parts (11,12) with the movable jaws (5,6) are elastically supported by the vice body (1) and in the no-load condition are offset to a small extent from their designated operating position.

8. Multiple clamping device according to one or more of the preceding claims, characterized in that the movable jaws (5,6) each comprise a slide (3,4) that acts together with the screw spindle parts (11,12), with a jaw element (44) mounted onto the slide (3,4) being removably and transferrably fixed just as the fixed jaw (7,8).

9. Multiple clamping device according to one or more of the preceding claims, characterized by a sleeve (22) surrounding one of the spindle parts (12) and determining the axial position of the spindle parts (11,12).

10. Multiple clamping device according to claim 9, characterized by a clamping fixture between the sleeve (22) and the spindle parts (11,12).

## Revendications

1. Moyen de serrage multiple pour le serrage d'au moins deux pièces dans un dispositif de serrage, comprenant un corps d'étau (1) portant à chacune des extrémités opposées une mâchoire fixe (7, 8), deux mâchoires mobiles (5, 6) associées chacune à une mâchoire fixe (7, 8) et entraînées ensemble étant guidées entre les deux mâchoires fixes (7, 8) dans le corps (1) de l'étau, **caractérisé en ce** qu'une broche (11, 12) en deux parties dont les deux parties peuvent tourner ensemble et se déplacer axialement l'une par rapport à l'autre, s'étend dans le corps (1) de l'étau le long du guidage (35), lesdites parties (11, 12) de la broche avec des filetages (15, 16) en sens opposé coopérant chacune avec l'une des deux mâchoires mobiles (5, 6) ainsi qu'avec un dispositif pour augmenter la force de serrage qui écarte les deux parties de broche (11, 12) dans la position de serrage.

2. Moyen de serrage multiple selon la revendication 1, caractérisé en ce que le dispositif pour augmenter la force de serrage est un amplificateur de puissance (29) entraîné par l'intermédiaire de l'entraînement (18) de la broche filetée (11, 12).

3. Moyen de serrage multiple selon l'une quelconque des deux revendications précédentes, caractérisé en ce qu'au moins l'une des parties de broche (11, 12) est creuse et reçoit l'entraînement pour le dispositif pour augmenter la force de serrage.

4. Moyen de serrage multiple selon l'une quelconque des revendications précédentes, caractérisé en ce que les deux parties de broche (11, 12) reçoivent en elles le dispositif pour augmenter la force de serrage.

5. Moyen de serrage multiple selon l'une quelconque des revendications précédentes, caractérisé en ce que l'une des parties de broche (12) présente une forme tubulaire et reçoit la broche d'entraînement (18) de l'amplificateur de puissance, que l'autre partie de broche (11) présente au moins en partie un creux (45) dans lequel dépasse la partie de broche (12) et qui reçoit l'amplificateur de puissance (29).

6. Moyen de serrage multiple selon l'une quelconque des revendications précédentes, caractérisé en ce qu'entre les deux parties de broche (11, 12) est prévu un système de trou oblong (13) dans lequel se déplace un axe (14).

7. Moyen de serrage multiple selon l'une quelconque des revendications précédentes, caractérisé en ce que les deux parties de broche (11, 12) s'appuient avec les mâchoires mobiles (5, 6) élastiquement sur le corps (1) de l'étau et que, à l'état non chargé, elles sont décalées d'une faible quantité par rapport à leur position de service prévue.

8. Moyen de serrage multiple selon l'une quelconque des revendications précédentes, caractérisé en ce que les mâchoires mobiles (5, 6) comportent chacune un coulisseau (3, 4) qui coopère avec les parties (11, 12) de la broche filetée, un élément de mâchoire (44) monté sur les coulisseaux (3, 4) étant maintenu, tout comme la mâchoire fixe (7, 8), de manière interchangeable et déplaçable.

9. Moyen de serrage multiple selon l'une quelconque des revendications précédentes, caractérisé en ce qu'il comprend une douille (22) qui enveloppe l'une des parties de broche (12) et détermine la position axiale desdites parties de broche (11, 12).

10. Moyen de serrage multiple selon la revendication 9, caractérisé en ce qu'il comprend une jonction par serrage entre la douille (22) et les parties de broche (11, 12).
